# EUROPEAN PATENT SPECIFICATION

(11) **EP 3 828 622 B1**
(45) Date of publication and mention of the grant of the patent: **17.01.2024**
(21) Application number: 20171816.0
(22) Date of filing: 28.04.2020
(51) Int. Cl.: G02F 1/03, G02F 1/035

(54) **PANEL, DISPLAY COMPONENT, AND METHOD FOR CONTROLLING VIEW ANGLE OF DISPLAY COMPONENT**
TAFEL, ANZEIGEKOMPONENTE UND VERFAHREN ZUR STEUERUNG DES SICHTWINKELS DER ANZEIGEKOMPONENTE
PANNEAU, COMPOSANT D'AFFICHAGE ET PROCÉDÉ DE RÉGLAGE DE L'ANGLE DE VUE D'UN COMPOSANT D'AFFICHAGE

(30) Priority: 29.11.2019 CN 201911207314
(43) Date of publication of application: 02.06.2021
(73) Proprietor: Beijing Xiaomi Mobile Software Co., Ltd., Beijing 100085 (CN)
(72) Inventor: HU, Xiankun, Beijing, 100085 (CN)
(74) Representative: Kudlek, Franz Thomas

(56) References cited:
- CN-A- 108 710 222
- US-A- 5 317 429
- US-A1- 2014 226 093
- US-A1- 2018 188 576

## Description

### TECHNICAL FIELD

The invention relates to the field of display, and particularly to a panel, a display component, and a method for controlling a view angle of a display component.

### BACKGROUND

With wide application of smart terminal technologies, electronic products with display screens are more and more popular in daily lives. In order to protect privacy, when using an electronic product with a display screen at a densely populated public place, people do not want their private information displayed on the display screen to be seen by other people in the surrounding.

US2018/188576A1 discloses a display screen, a display device and a display method. The display screen includes a display panel and a dye liquid crystal cell. The dye liquid crystal cell is arranged on a side of the display panel, and the dye liquid crystal cell is configured to control an emergent direction of light that has been transmitted through the dye liquid crystal cell under the influence of an electric field.

US005317429A discloses an optical switching device in which a light beam is guided through a layered structure and is emitted out of the main surface of the layered structure by a switching operation.

US2014/226093A1 discloses an electronically switchable privacy film suitable for use in display devices. The electronically switchable privacy film includes a pair of mutually opposing transparent electrodes, an optically transparent microstructured layer disposed between the transparent electrodes and electronically switchable material.

CN108710222A discloses an anti-peep structure, a method for manufacturing an anti-peep structure, and a display device.

In the related art, a display screen of a mobile phone has a large view angle, resulting in that what is displayed on the display screen can be clearly seen even by people far away from the front side of the display screen. This is not favorable for protecting the privacy of the mobile phone user, since there is a risk of privacy leak.

### SUMMARY

The present invention is defined in the claims. Provided in the invention are a panel, a display component, a terminal, a method for controlling a view angle of a display component, and a device for controlling a view angle of a display component.

The technical solution provided in the embodiments of the invention may have the following beneficial effects:

In the embodiments of the invention, the panel includes a first conductive layer that is transparent; a second conductive layer that is transparent, wherein light rays can enter through the first conductive layer and the second conductive; and a refractive-index-variable layer between the first conductive layer and the second conductive layer. A refractive index of the variable-refractive-index layer varies with a voltage applied between the first conductive layer and the second conductive layer. Here, by applying a different voltage between the first conductive layer and the second conductive layer to change the refractive index of the refractive-index-variable layer, the optical path of a light ray entering the panel through a same position can be changed, so that the emergent angle of the light ray leaving the panel is changed. As such, the view angle of a display screen of a terminal (for example, a display screen of a mobile phone) containing the panel can be changed. The requirement of providing different view angles in different application scenarios can be satisfied, and user experience can be promoted.

It should be understood that the general description above and detailed description later are merely exemplary and explanatory, and are not intended to restrict the invention.

### BRIEF DESCRIPTION OF THE DRAWINGS

The accompanying drawings herein are incorporated into the specification and constitute part of the present specification, illustrate examples consistent with the invention and are intended for explaining the principles of the invention together with the specification.
FIG. 1A illustrates a schematic structural diagram of a glass panel applied to a display screen in the related art.
FIG. 1B illustrates a schematic structural diagram of a panel according to an example.
FIG. 2 illustrates a schematic structural diagram of a panel according to another example.
FIG. 3 illustrates a schematic structural diagram of an optical transmission structure in a panel according to an example.
FIG. 4 illustrates a schematic diagram of optical paths of light rays in a panel according to an example.
FIG. 5 illustrates a schematic structural diagram of a panel according to another example.
FIG. 6 illustrates a schematic structural diagram of a panel according to another example.
FIG. 7 illustrates a schematic structural diagram of an optical transmission structure in a panel according to another example.
FIG. 8A illustrates a schematic structural diagram of a display component according to an example.
FIG. 8B illustrates a schematic diagram of determining a view angle according to an example.
FIG. 9A illustrates a schematic structural diagram of a terminal according to an example.
FIG. 9B illustrates a schematic structural diagram of a terminal according to an example.
FIG. 10 illustrates a schematic flowchart of a method for determining a view angle of a display component according to an example.
FIG. 11 illustrates a schematic structural diagram of a device for controlling a view angle of a display component according to an example.

### DETAILED DESCRIPTION

Detailed description will be made here to examples, which are illustrated in the accompanying drawings. When drawings are involved in the following description, identical numerals in different drawings refer to identical or similar elements, unless otherwise indicated. Implementations described in the following examples do not mean all the implementations consistent with the invention. On the contrary, they are merely examples of devices and methods consistent with some aspects of the invention detailed in the appended claims.

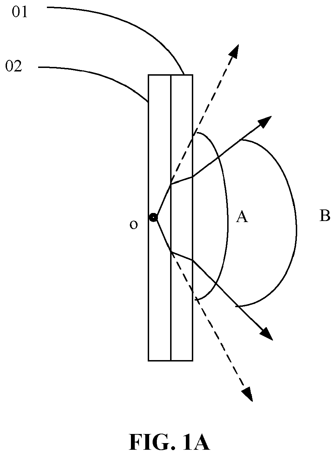

FIG. 1A illustrates a schematic structural diagram of a glass panel applied to a display screen in the related art. The glass panel 01 is attached to a display screen 02 of a terminal (for example a mobile phone). Light rays emitted from a light-emitting point "o" on the display screen 02 pass through the glass panel 01 and then are emergent from a surface of the glass panel 01. A magnitude of a view angle corresponding to the light-emitting point "o" changes from original A to B, where A is greater than B. In this way, the glass panel 01 enables the view angle to be changed smaller so that information displayed at the light-emitting point "o" can only be seen by human eyes within a smaller range, thus obtaining a peep-proof effect. However, the following problem exists with such an implementation: firstly, the glass panel 01 can merely adjust the view angle in the single way, and the view angle cannot be adjusted flexibly; secondly, a user needs to repeatedly tear away and attach the glass panel 01 from/to the display screen 02 to adjust the view angle, which is troublesome in actual operation and may easily cause damage to the display screen 02.

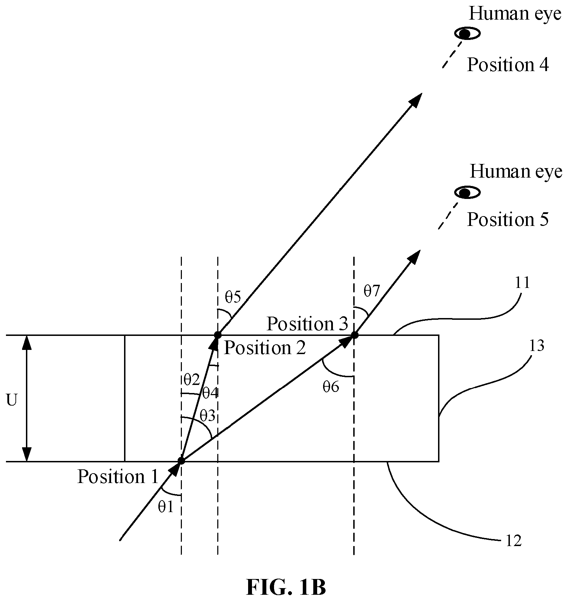

FIG. 1B illustrates a schematic structural diagram of a panel according to an example. As illustrated in FIG. 1B, the panel includes: a first conductive layer 11 that is transparent, a second conductive layer 12 that is transparent, and a variable-refractive-index layer 13 between the first conductive layer 11 and the second conductive layer 12.

A refractive index of the variable-refractive-index layer 13 varies with a voltage applied between the first conductive layer 11 and the second conductive layer 12.

Here, it may be the case where the variable-refractive-index layer 13 has a first refractive-index when a first voltage U1 is applied between the first conductive layer 11 and the second conductive layer 12, and the variable-refractive-index layer 13 has a second refractive-index when a second voltage U2 is applied between the first conductive layer 11 and the second conductive layer 12. Here, the first refractive-index is greater than the second refractive-index when U1 is greater than U2.

Here, the first conductive layer that is transparent is a first conductive layer through which light rays can pass, and the second conductive layer that is transparent is a second conductive layer through which light rays can pass. Here, the first conductive layer that is transparent and the second conductive layer that is transparent may be conductive layers, each having a light transmittance greater than a set threshold.

Here, the first conductive layer 11 may be a coating layer or a conductive film formed by applying a conductive material on the variable-refractive-index layer 13. The second conductive layer 12 may be a coating layer or a conductive film formed by applying a conductive material on the variable-refractive-index layer 13. The conductive material and the material of the film may be indium tin oxid (ITO). Here, the variable-refractive-index layer 13 may be fabricated by one of the following materials: potassium dihydrogen phosphate (KDP) crystal, lithium niobate (LiNbO3) crystal or gallium arsenide (GaAs) crystal.

Here, the incident light enters the panel at a position 1 with a corresponding incidence angle θ₁. The variable-refractive-index layer 13 has the first refractive-index when the first voltage U1 is applied between the first conductive layer 11 and the second conductive layer 12. At this time, the refraction angle in the variable-refractive-index layer 13 is θ₂. The incidence angle in the variable-refractive-index layer 13 is θ₄, where θ₂ = θ₄. The light ray is emergent at a position 2 with a corresponding refraction angle θ₅, where θ₁ = θ₅.

The variable-refractive-index layer 13 has the second refractive-index when the second voltage U2 is applied between the first conductive layer 11 and the second conductive layer 12. At this time, the refraction angle in the variable-refractive-index layer 13 is θ₃. The incidence angle in the variable-refractive-index layer 13 is θ₆, where θ₃ = θ₆. The light ray is emergent at the position 3 with a corresponding refraction angle θ₇, where θ₁ = θ₇,

Here, after a same light ray enters the panel at the position 1, when the second voltage U2 is applied between the first conductive layer 11 and the second conductive layer 12, the light ray entered at the position 1 can be seen by a human eye at a position 5. If the first voltage U1 is applied between the first conductive layer 11 and the second conductive layer 12, the light ray entered at the position 1 can be seen merely by a human eye at a position 4 and cannot be seen by the human eye at the position 5. It is to be noted that in order to make the schematic diagram more clear, the influence of the first conductive layer and the second conductive layer on the optical path is omitted in FIG. 1B.

In examples of the invention, by applying a different voltage between the first conductive layer 11 and the second conductive layer 12 to change the refractive index of the refractive-index-variable layer 13, the optical path of a light ray entering the panel at a same position can be changed, so that the emergent angle of the light ray leaving the panel is changed. As such, the view angle of a display screen of a terminal containing the panel can be changed. The requirement of providing different view angles in different application scenarios can be satisfied, and user experience can be promoted.

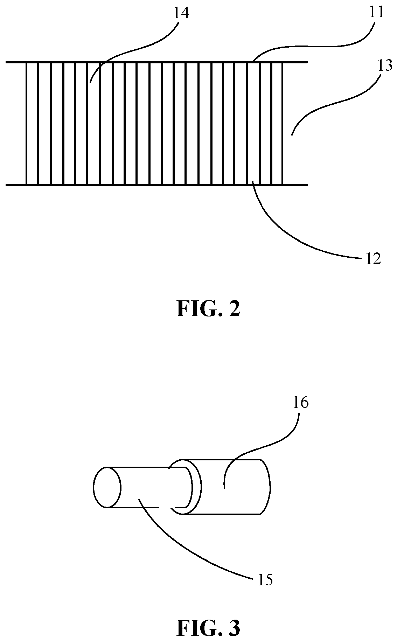

FIG. 2 illustrates a schematic structural diagram of a panel according to another example. As illustrated in FIG. 2, the variable-refractive-index layer 13 includes at least one optical transmission structure 14 between the first conductive layer 11 and the second conductive layer 12. As shown in FIG. 3, the optical transmission structure 14 includes a core 15 and a cladding 16 attached to an outer surface of the core 15, and the core 15 has a refractive index greater than a refractive index of the cladding 16.

The refractive index of the core 15 varies with the voltage applied between the first conductive layer 11 and the second conductive layer 12.

In this example, the refractive index of the core 15 of the optical transmission structure 14 is changed with the applied voltage, so that the refractive index of the entire variable-refractive-index layer 13 is changed.

Here, the cladding may be a coating layer or a film formed by applying a transparent material on an outer surface of the core 15. Here, the core 15 and the cladding 16 may be fabricated by one of the following materials: potassium dihydrogen phosphate (KDP) crystal, lithium niobate (LiNbO3) crystal or gallium arsenide (GaAs) crystal.

Preferably, the optical transmission structure 14 may be fiber.

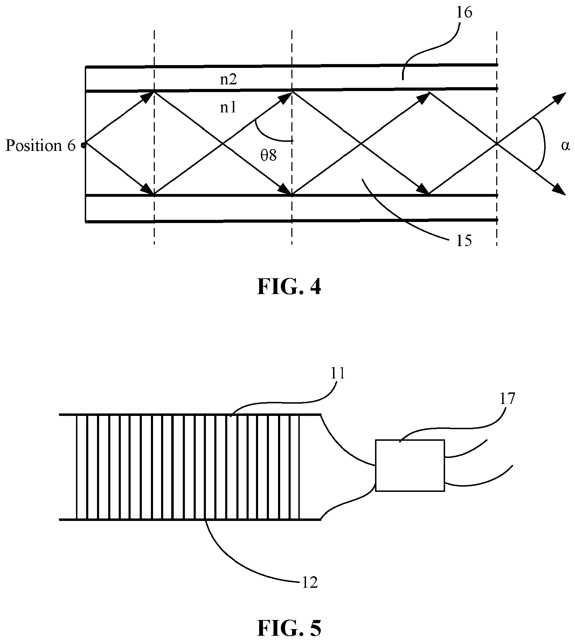

As shown in FIG. 4, in an example, the refractive index of the core 15 is n₁, and the refractive index of the cladding 16 is n₂, with n1 being greater than n₂. Here, n1 being greater than n₂ enables light rays entering the core 15 to be totally reflected on a contact surface between the core 15 and the cladding 16, thus reducing energy loss of the light rays. Here, the light rays enter at the position 6. Here, the relation between the view angle α and θ₈ is: α/2 ≤ 180-2*θ₈, where sin (θ₈) = n₂/n₁ (n₁ > n₂). Here, θ₈ is the incidence angle of the light ray in the core 15 being incident onto the contact surface between the core 15 and the cladding 16.

In an example, the core 15 is fabricated of a variable-refractive-index material, and the cladding 16 is fabricated of an invariable-refractive-index material. The refractive index of the core 15 varies with the voltage applied between the first conductive layer 11 and the second conductive layer 12, and the refractive index of the cladding 16 is not changed.

In an example which does not form part of the claimed device, the core 15 is fabricated of an invariable-refractive-index material, and the cladding 16 is fabricated of a variable-refractive-index material. The refractive index of the core 15 is not changed, and the refractive index of the cladding 16 varies with the voltage applied between the first conductive layer 11 and the second conductive layer 12. As such, θ₈ can be changed by changing the refractive index of the core 15 or the refractive index of the cladding 16, so as to obtain a different value for α.

In an example which does not form part of the claimed device, the core 15 is fabricated of a variable-refractive-index material, and the cladding 16 is fabricated of a variable-refractive-index material. The refractive index of the core 15 and the refractive index of the cladding 16 vary with the voltage applied between the first conductive layer 11 and the second conductive layer 12.

As shown in FIG. 5, in an example, the panel further includes a transformer 17 capable of outputting different voltages.

The transformer 17 is connected to the first conductive layer 11 and the second conductive layer 12 respectively.

For example, the transformer 17 has a first output and a second output. The first output is connected to the first conductive layer 11, and the second output is connected to the second conductive layer 12. One of the first output and the second output is a high voltage output, and the other one is a low voltage output. As such, a voltage difference is produced between the first conductive layer 11 and the second conductive layer 12, so that a voltage of a certain magnitude is applied to the variable-refractive-index layer 13 between the first conductive layer 11 and the second conductive layer 12.

Here, the transformer 17 can output a continuously variable voltage, for example, a voltage of any magnitude between 1 V to 20 V The transformer 17 may also output discrete voltages, e.g., 1 V, 5 V and 10 V Here, since the transformer is connected to the first conductive layer 11 and the second conductive layer 12 respectively, and different voltages can be output by the transformer 17, different voltages can be applied between the first conductive layer 11 and the second conductive layer 12.

The transformer 17 includes a primary coil 18 and a plurality of secondary coils 19.

The panel further includes a shift switch 20 for controlling a subset of the secondary coils 19 to be coupled with the primary coil 18 through adjusting a switch state. Each subset of the secondary coils 19, when being coupled with the primary coil 18, causes a respective voltage applied between the first conductive layer 11 and the second conductive layer 12 by the transformer 17.

In some examples, the primary coil may be coupled with one of the secondary coils. In some other examples, the secondary coils may also be coupled with multiple of the secondary coils at the same time. When the primary coil is coupled with multiple of the secondary coils, the voltage output by the transformer may be equal to the voltage of the primary coil. The multiple of the secondary coils may be combined to be coupled with the primary coil to output a transformed voltage.

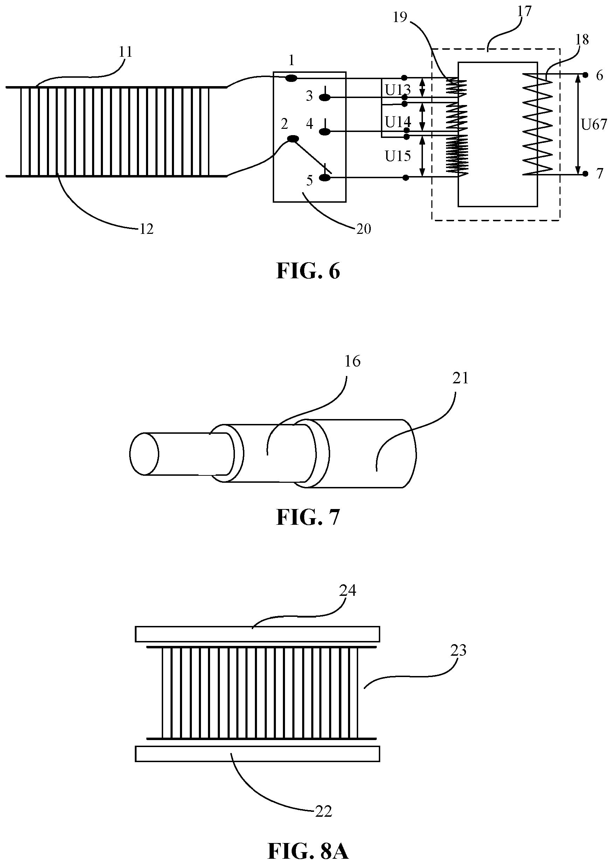

As shown in FIG. 6, in an example, the transformer 17 includes a primary coil 18 and three secondary coils 19. The three secondary coils are a first secondary coil, a second secondary coil and a third secondary coil. An input voltage between a terminal 6 and a terminal 7 of the secondary coil 18 is U₆₇. Voltages output by the first secondary coil, the second secondary coil and the third secondary coil are U₁₃, U₁₄ and U₁₅ respectively. The first secondary coil, the second secondary coil and the third secondary coil have a common terminal 1, and the common terminal 1 is electrically connected to the first conductive layer 11. A non-common terminal l of the first secondary coil is electrically connected to a terminal 3 of the shift switch 20. A non-common terminal of the second secondary coil is electrically connected to the terminal 4 of the shift switch 20. A non-common terminal of the third secondary coil is electrically connected to the terminal 5 of the shift switch 20. A terminal 2 of the shift switch 20 is electrically connected to the second conductive layer 12. The switch state includes one of the following: a first switch state in which the terminal 2 is connected to the terminal 3, a second switch state in which the terminal 2 is connected to the terminal 4, and a third switch state in which the terminal 2 is connected to the terminal 5. Here, each of the switch states causes a respective voltage applied between the first conductive layer 11 and the second conductive layer 12. For example, when the switch is in the first switch state, the voltage applied between the first conductive layer 11 and the second conductive layer 12 is U₁₃. When the switch is in the second switch state, the voltage applied between the first conductive layer 11 and the second conductive layer 12 is U₁₄. When the switch is in the third switch state, the voltage applied between the first conductive layer 11 and the second conductive layer 12 is U₁₅.

It is to be noted that the transformer 17 may be arranged within the panel in this example. Alternatively, in this example, the panel may also be merely provided with an interface for connecting to the transformer 17, and the transformer 17 can be arranged on another component (instead of the panel) of the terminal.

As shown in FIG. 7, a protective layer 21 formed of a transparent material is provided on an outer surface of the cladding 16. Here, the cladding 16 may be a coating layer or a film formed by applying a transparent layer on an outer surface of the core 15. The transparent material has a light transmittance greater than a third set threshold. The protective layer 21 can protect the cladding 16 from being damaged during manufacturing of the panel, which would affect reflection of light rays at a contact surface between the core 15 and the cladding 16.

FIG. 8A illustrates a schematic structural diagram of a display component according to an example. As illustrated in FIG. 8A, the display component includes a display screen 22 and the panel 23 provided in any example of the invention.

The panel 23 is located on an outer surface of the display screen 22.

The display component has a view angle varying with a refractive index of the variable-refractive-index layer of the panel.

In an example, when the variable-refractive-index layer have a first refractive index, the display component has a first view angle. When the variable-refractive-index layer has a second refractive index, the display component has a second view angle. The first view angle is smaller than the second view angle.

Here, the display screen may be a display screen of a mobile phone, a display screen of a computer, a display screen of a smart television, etc. Since the first view angle is smaller than the second view angle, the view angle within which the content displayed on the display screen 22 is visible can be reduced. In this way, it would be difficult for other people to peep the information displayed on the display screen 22, so as to promote the security of the information.

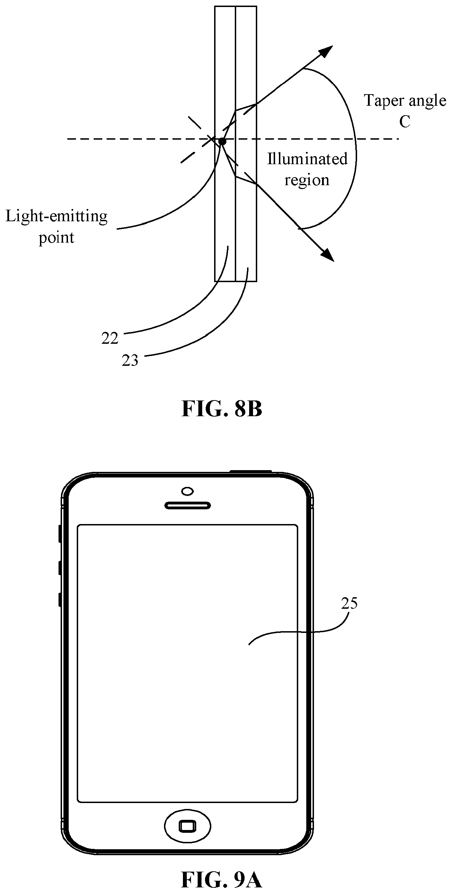

In an example, as shown in FIG. 8B, a light-emitting point on the display screen 22 may be taken as an origin to determine a plane passing through the origin and perpendicular to the display screen. After passing through the panel 23, light rays from the light-emitting point will form a tapered illuminated area on the plane. The taper angle C of the cone may be determined as the view angle. In an example, the display component further includes a transparent protective glass 24.

The panel 23 is located between the display screen 22 and the protective glass 24.

The protective glass 24 can protect the panel 23 and the display screen 22 from being damaged.

FIG. 9A illustrates a schematic structural diagram of a terminal according to an example. As illustrated in FIG. 9A, the terminal includes the display component 25 provided in any example of the invention, and a processing module connected with the display component 25 and configured to control the voltage applied between the first and second conductive layers of the panel in the display component 25.

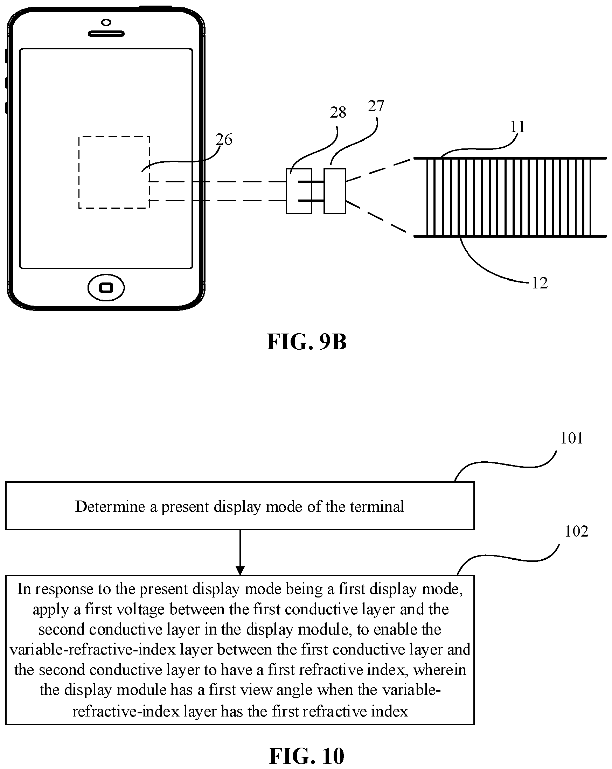

The terminal may be a mobile phone, a computer, a smart television, etc. The processing module may be a mainboard or processor of the terminal. As shown in FIG. 9B, the display component 25 may be inserted, via a plug 27, into a socket 28 connected to the mainboard or processor 26 of the terminal.

The processing module may apply, according to an operation instruction of a user, a different voltage between the first conductive layer 11 and the second conductive layer 12 of the panel in the display component 25, so that the refractive index of the variable-refractive-index layer 13 of the panel is changed, so as to adjust the view angle of the display component 25.

FIG. 10 illustrates a schematic flowchart of a method for determining a view angle of a display component according to an example. As illustrated in FIG. 10, the method is applied to the terminal according to any example of the invention. The method includes the following steps.

At step 101, a present display mode of the terminal is determined.

The present display mode may be one selected from multiple selectable display modes at present. The display component has different view angles in different display modes.

The terminal has two or more display modes. In the examples of the invention, the first display mode and the second display mode merely refer to any two different display modes in general.

For example, in a display mode, the display component has a view angle of 30°, and in another display mode, the display component has a view angle of 45°. For example, if a user selects, on a setting interface displayed on a display screen of a terminal, a setting option of a display mode with a view angle of 45°, then the present display mode of the terminal is the display mode with the view angle of 45°. Since the display component has a view angle of 45° in this display mode, the user can only see information displayed on the display screen of the terminal within the view angle of 45°.

At step 102, in response to the present display mode being a first display mode, a first voltage is applied between the first conductive layer 11 and the second conductive layer 12 in the display component, to enable the refractive-index-variable layer between the first conductive layer 11 and the second conductive layer 12 to have a first refractive index. The display component has a first view angle with the first refractive index of the refractive-index-variable layer.

In an example, in response to the present display mode being the first display mode, the first voltage is applied between the first conductive layer 11 and the second conductive layer 12 in the display component, to enable the variable-refractive-index layer between the first conductive layer 11 and the second conductive layer 12 to have the first refractive index. In response to the present display mode being a second display mode, a second voltage is applied between the first conductive layer 11 and the second conductive layer 12 in the display component, to enable the refractive-index-variable layer between the first conductive layer 11 and the second conductive layer 12 to have a second refractive index. The display component has a first view angle with the first refractive index of the refractive-index-variable layer. The display component has a second view angle with the second refractive index of the variable-refractive-index layer. The first view angle is smaller than the second view angle. When the voltage applied between the first conductive layer 11 and the second conductive layer 12 is changed from the second voltage to the first voltage, the view angle is changed from the second view angle to the first view angle, thus reducing the view angle.

According to different display modes, different voltages are applied between the first conductive layer 11 and the second conductive layer 12 in the display component. This will change the view angle of the display component, so that a human eye can only see information displayed in the display component within partial region (within the view angle) in front of the display component, facilitating protecting privacy.

In an example, the terminal is further provided with a transformer. The method further includes the following step.

At step 103, an output voltage of the transformer 17 is controlled according to the present display mode. The output voltage of the transformer 17 is applied between the first conductive layer 11 and the second conductive layer 12.

Here, the transformer 17 may be controlled to output a continuously variable voltage. As such, the magnitude of the view angle may also be continuously variable, and the control over the view angle is more exquisite. For example, if the transformer 17 is controlled to output a voltage continuously variable in a range from 5 V to 10 V, the view angle may be continuously variable in a range from 30° to 60°.

Here, the transformer 17 may also be controlled to output discrete voltages, so that the magnitude of the view angle may be changed among different discrete values. For example, if the transformer 17 is controlled to output voltages 5 V, 7.5 V and 10 V, the view angles may be 30°, 45° and 60° correspondingly.

In step 103, the operation of controlling the output voltage of the transformer 17 according to the present display mode includes the following step:
At step 104, according to the present display mode, a subset of the secondary coils 19 in the transformer 17 is controlled to be coupled with the primary coil 18, through adjusting a switch state of a shift switch 20. Each subset of the secondary coils 19, when being coupled with the primary coil 18, causes a respective voltage applied between the first conductive layer 11 and the second conductive layer 12 by the transformer 17.

The transformer 17 may include a plurality of secondary coils 19. Each of the secondary coils 19 outputs a respective voltage. For example, the first secondary coil correspondingly outputs a voltage of 5V. The second secondary coil correspondingly outputs a voltage of 7.5V. The third secondary coil correspondingly outputs a voltage of 10V The state of the switch may be a state in which the shift switch 20 connects the first conductive layer 11 and the second conductive layer 12 to one of the secondary coils 19. Here, when the first conductive layer 11 and the second conductive layer 12 are connected to the first secondary coil, a voltage of 5 V is applied between the first conductive layer 11 and the second conductive layer 12.

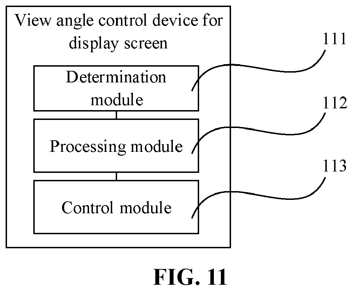

FIG. 11 illustrates a schematic structural diagram of a device for controlling a view angle of a display component according to an example. As illustrated in FIG. 11, the device for controlling a view angle of a display component is applied to the terminal according to any example of the invention. The device includes a determination module 111 and a processing module 112.

The determination module 111 is configured to determine a present display mode of the terminal.

The processing module 112 is configured to: in response to the present display mode being a first display mode, apply a first voltage between the first conductive layer and the second conductive layer in the display component, to enable the variable-refractive-index layer between the first conductive layer and the second conductive layer to have a first refractive index; and in response to the present display mode being a second display mode, apply a second voltage between the first conductive layer and the second conductive layer in the display component, to enable the refractive-index-variable layer between the first conductive layer and the second conductive layer to have a second refractive index. The display component has a first view angle with the first refractive index of the refractive-index-variable layer. The display component has a second view angle with the second refractive index of the variable-refractive-index layer. The first view angle is smaller than the second view angle.

In an example, the device further includes a control module 113. The control module 113 is configured to control an output voltage of the transformer according to the present display mode. The output voltage of the transformer is applied between the first conductive layer and the second conductive layer.

In an example, the control module 113 is further configured to control, according to the present display mode, a subset of the secondary coils in the transformer to be coupled with the primary coil, through adjusting a switch state of a shift switch. Each subset of the secondary coils, when being coupled with the primary coil, causes a respective voltage applied between the first conductive layer and the second conductive layer by the transformer.

Further provided in examples of the invention is a terminal, including a memory, a processor and a computer program stored in the memory for running. The computer program, when executed by the processor, implements the method for controlling a view angle of a display component according to any example of the invention.

Other embodiments of the invention would readily occur to those skilled in the art when considering the specification and practicing the invention here.

The specification and examples are merely considered exemplary, and the true scope of the invention is specified by the appended claims.

It should be understood that the invention is not limited to the precise structures described above and illustrated in the accompanying drawings, and modifications and changes may be made thereto without departing from the scope thereof. The scope of the invention is merely defined by the appended claims.

## Claims

1. A terminal, comprising:
a display component (25), comprising a display screen (22) and a panel (23),
wherein the panel (23) comprises:
a first conductive layer (11) that is transparent, a second conductive layer (12) that is transparent, and a variable-refractive-index layer (13) between the first conductive layer (11) and the second conductive layer (12),
wherein a refractive index of the variable-refractive-index layer (13) varies in response to a change of a voltage applied between the first conductive layer (11) and the second conductive layer (12),
the panel (23) is located on an outer surface of the display screen,
the display component (25) has a view angle varying with a refractive index of the variable-refractive-index layer (13) of the panel (23); and
a processing module (112), connected with the display component (25) and configured to: in response to a display mode to be activated being a first display mode, apply a first voltage between the first conductive layer (11) and the second conductive layer (12) of the panel (23) in the display component (25), to enable the variable-refractive-index layer (13) between the first conductive layer (11) and the second conductive layer (12) to have a first refractive index, wherein the display component (25) has a first view angle when the variable-refractive-index layer (13) has the first refractive index,
wherein the variable-refractive-index layer (13) comprises: at least one optical transmission structure (14) between the first conductive layer (11) and the second conductive layer (12), wherein the optical transmission structure (14) comprises a core (15) and a cladding (16) attached to an outer surface of the core (15), and the core (15) has a refractive index greater than a refractive index of the cladding (16);
**characterised in that** Z the refractive index of the core (15) varies in response to the change of the voltage applied between the first conductive layer (11) and the second conductive layer (12), such that with increasing voltage applied the refractive index increases.

2. The terminal according to claim 1, further comprising:
a determination module (111), configured to select the display mode to be activated of the terminal.

3. A method for controlling a view angle of a display component (25), comprising:
selecting, by a terminal comprising the display component (25), a display mode to be activated of the terminal; and
in response to the display mode to be activated being a first display mode, applying, by the terminal, a first voltage between the first conductive layer (11) and the second conductive layer (12) in the display component (25), to enable a variable-refractive-index layer (13) between a first conductive layer (11) and a second conductive layer (12) to have a first refractive index, wherein the display component (25) has a first view angle when the variable-refractive-index layer (13) has the first refractive index,
wherein the variable-refractive-index layer (13) comprises: at least one optical transmission structure (14) between the first conductive layer (11) and the second conductive layer (12), wherein the optical transmission structure (14) comprises a core (15) and a cladding (16) attached to an outer surface of the core (15), and the core (15) has a refractive index greater than a refractive index of the cladding (16);
**characterised in that** the refractive index of the core (15) varies in response to the change of the voltage applied between the first conductive layer (11) and the second conductive layer (12), such that with increasing voltage applied the refractive index increases.

4. The method according to claim 3, further comprising:
in response to the display mode to be activated being a second display mode, applying a second voltage between the first conductive layer (11) and the second conductive layer (12) in the display component (25), to enable the variable-refractive-index layer (13) between the first conductive layer (11) and the second conductive layer (12) to have a second refractive index, wherein the display component (25) has a second view angle with the variable-refractive-index layer (13) having the second refractive index.

5. The method according to claim 3 or 4, wherein the terminal is further provided with a transformer, and the method further comprises:
controlling an output voltage of the transformer (17) according to the display mode to be activated, wherein the output voltage of the transformer (17) is applied between the first conductive layer (11) and the second conductive layer (12).

6. The method according to claim 5, wherein controlling the output voltage of the transformer according to the display mode to be activated comprises:
controlling, according to the display mode to be activated, a subset of the secondary coils in the transformer to be coupled with the primary coil, through adjusting a switch state of a shift switch,
wherein each subset of the secondary coils, when being coupled with the primary coil, causes a respective voltage applied between the first conductive layer (11) and the second conductive layer (12) by the transformer (17).

## Patentansprüche

1. Ein Terminal, aufweisend:
eine Anzeigekomponente (25), die einen Anzeigebildschirm (22) und eine Platte (23) umfasst,
wobei die Platte (23) umfasst:
eine erste leitende Schicht (11), die transparent ist, eine zweite leitende Schicht (12), die transparent ist, und eine Schicht (13) mit variablem Brechungsindex zwischen der ersten leitenden Schicht (11) und der zweiten leitenden Schicht (12),
wobei ein Brechungsindex der Schicht (13) mit variablem Brechungsindex in Reaktion auf eine Änderung einer zwischen der ersten leitenden Schicht (11) und der zweiten leitenden Schicht (12) angelegten Spannung variiert,
die Platte (23) befindet sich auf einer Außenfläche des Bildschirms,
die Anzeigekomponente (25) einen Betrachtungswinkel hat, der mit einem Brechungsindex der Schicht (13) mit variablem Brechungsindex der Platte (23) variiert; und
ein Verarbeitungsmodul (112), das mit der Anzeigekomponente (25) verbunden und konfiguriert ist, um: Anlegen einer ersten Spannung zwischen der ersten leitenden Schicht (11) und der zweiten leitenden Schicht (12) der Platte (23) in der Anzeigekomponente (25) als Reaktion auf einen zu aktivierenden Anzeigemodus, der ein erster Anzeigemodus ist, um zu ermöglichen, dass die Schicht (13) mit variablem Brechungsindex zwischen der ersten leitenden Schicht (11) und der zweiten leitenden Schicht (12) einen ersten Brechungsindex aufweist, wobei die Anzeigekomponente (25) einen ersten Sichtwinkel aufweist, wenn die Schicht (13) mit variablem Brechungsindex den ersten Brechungsindex aufweist,
wobei die Schicht mit variablem Brechungsindex (13) umfasst: mindestens eine optische Übertragungsstruktur (14) zwischen der ersten leitenden Schicht (11) und der zweiten leitenden Schicht (12), wobei die optische Übertragungsstruktur (14) einen Kern (15) und einen Mantel (16) umfasst, der an einer äußeren Oberfläche des Kerns (15) angebracht ist, und der Kern (15) einen Brechungsindex aufweist, der größer als ein Brechungsindex des Mantels (16) ist; **dadurch gekennzeichnet, dass** sich der Brechungsindex des Kerns (15) in Reaktion auf die Änderung der zwischen der ersten leitenden Schicht (11) und der zweiten leitenden Schicht (12) angelegten Spannung ändert, so dass mit zunehmender angelegter Spannung der Brechungsindex zunimmt.

2. Das Terminal nach Anspruch 1, ferner umfassend:
ein Bestimmungsmodul (111), das konfiguriert ist, um den zu aktivierenden Anzeigemodus des Terminals auszuwählen.

3. Verfahren zur Steuerung eines Blickwinkels einer Anzeigekomponente (25), das Folgendes umfasst:
Auswahl eines zu aktivierenden Anzeigemodus des Endgeräts durch ein Endgerät mit der Anzeigekomponente (25); und
als Reaktion darauf, dass der zu aktivierende Anzeigemodus ein erster Anzeigemodus ist, Anlegen einer ersten Spannung zwischen der ersten leitenden Schicht (11) und der zweiten leitenden Schicht (12) in der Anzeigekomponente (25) durch den Anschluss, Anlegen einer ersten Spannung zwischen der ersten leitenden Schicht (11) und der zweiten leitenden Schicht (12) in der Anzeigekomponente (25) durch den Anschluss, um eine Schicht (13) mit variablem Brechungsindex zwischen einer ersten leitenden Schicht (11) und einer zweiten leitenden Schicht (12) zu ermöglichen, um einen ersten Brechungsindex zu haben, wobei die Anzeigekomponente (25) einen ersten Sichtwinkel hat, wenn die Schicht (13) mit variablem Brechungsindex den ersten Brechungsindex hat,
wobei die Schicht mit variablem Brechungsindex (13) umfasst: mindestens eine optische Übertragungsstruktur (14) zwischen der ersten leitenden Schicht (11) und der zweiten leitenden Schicht (12), wobei die optische Übertragungsstruktur (14) einen Kern (15) und einen Mantel (16) umfasst, der an einer äußeren Oberfläche des Kerns (15) angebracht ist, und der Kern (15) einen Brechungsindex aufweist, der größer als ein Brechungsindex des Mantels (16) ist; **dadurch gekennzeichnet, dass** sich der Brechungsindex des Kerns (15) in Reaktion auf die Änderung der zwischen der ersten leitenden Schicht (11) und der zweiten leitenden Schicht (12) angelegten Spannung ändert, so dass mit zunehmender angelegter Spannung der Brechungsindex zunimmt.

4. Verfahren nach Anspruch 3 ferner umfassend:
als Reaktion darauf, dass der zu aktivierende Anzeigemodus ein zweiter Anzeigemodus ist, Anlegen einer zweiten Spannung zwischen der ersten leitenden Schicht (11) und der zweiten leitenden Schicht (12) in der Anzeigekomponente (25), um zu ermöglichen, dass die Schicht (13) mit variablem Brechungsindex zwischen der ersten leitenden Schicht (11) und der zweiten leitenden Schicht (12) einen zweiten Brechungsindex aufweist, wobei die Anzeigekomponente (25) einen zweiten Betrachtungswinkel aufweist, wenn die Schicht (13) mit variablem Brechungsindex den zweiten Brechungsindex aufweist.

5. Verfahren nach Anspruch 3 oder 4, wobei das Terminal ferner mit einem Transformator versehen ist und das Verfahren ferner umfasst:
Steuern einer Ausgangsspannung des Transformators (17) in Abhängigkeit von dem zu aktivierenden Anzeigemodus, wobei die Ausgangsspannung des Transformators (17) zwischen der ersten leitenden Schicht (11) und der zweiten leitenden Schicht (12) angelegt wird.

6. Verfahren nach Anspruch 5, wobei die Steuerung der Ausgangsspannung des Transformators in Abhängigkeit von dem zu aktivierenden Anzeigemodus umfasst:
Steuerung einer Teilmenge der mit der Primärspule zu koppelnden Sekundärspulen im Transformator entsprechend dem zu aktivierenden Anzeigemodus durch Einstellung eines Schaltzustands eines Umschalters,
wobei jede Untergruppe der Sekundärspulen, wenn sie mit der Primärspule gekoppelt ist, eine entsprechende Spannung verursacht, die zwischen der ersten leitenden Schicht (11) und der zweiten leitenden Schicht (12) durch den Transformator (17) angelegt wird.

## Revendications

1. Un terminal comprenant
un composant d'affichage (25), comprenant un écran d'affichage (22) et un panneau (23),
dans lequel le panneau (23) comprend
une première couche conductrice (11) transparente, une seconde couche conductrice (12) transparente et une couche à indice de réfraction variable (13) entre la première couche conductrice (11) et la seconde couche conductrice (12),
dans lequel l'indice de réfraction de la couche à indice de réfraction variable (13) varie en réponse à une modification de la tension appliquée entre la première couche conductrice (11) et la seconde couche conductrice (12),
le panneau (23) est situé sur une surface extérieure de l'écran d'affichage,
le composant d'affichage (25) a un angle de vision qui varie en fonction de l'indice de réfraction de la couche à indice de réfraction variable (13) du panneau (23) ; et
un module de traitement (112), connecté au composant d'affichage (25) et configuré pour : en réponse à un mode d'affichage à activer qui est un premier mode d'affichage, appliquer une première tension entre la première couche conductrice (11) et la deuxième couche conductrice (12) du panneau (23) dans le composant d'affichage (25), pour permettre à la couche à indice de réfraction variable (13) entre la première couche conductrice (11) et la deuxième couche conductrice (12) d'avoir un premier indice de réfraction, le composant d'affichage (25) ayant un premier angle de vue lorsque la couche à indice de réfraction variable (13) a le premier indice de réfraction,
dans laquelle la couche à indice de réfraction variable (13) comprend : au moins une structure de transmission optique (14) entre la première couche conductrice (11) et la seconde couche conductrice (12), dans laquelle la structure de transmission optique (14) comprend un noyau (15) et une gaine (16) fixée à une surface extérieure du noyau (15), et le noyau (15) a un indice de réfraction supérieur à un indice de réfraction de la gaine (16) ; **caractérisé par le fait que** l'indice de réfraction du noyau (15) varie en réponse au changement de la tension appliquée entre la première couche conductrice (11) et la seconde couche conductrice (12), de telle sorte que l'indice de réfraction augmente avec l'augmentation de la tension appliquée

2. Le terminal selon la revendication 1, comprenant en outre :
un module de détermination (111), configuré pour sélectionner le mode d'affichage à activer du terminal.

3. Méthode de contrôle de l'angle de vue d'un composant d'affichage (25), comprenant :
sélection, par un terminal comprenant le composant d'affichage (25), d'un mode d'affichage à activer sur le terminal ; et
en réponse au mode d'affichage à activer qui est un premier mode d'affichage, appliquer, par le terminal, une première tension entre la première couche conductrice (11) et la seconde couche conductrice (12) dans le composant d'affichage (25), pour permettre à une couche à indice de réfraction variable (13) entre une première couche conductrice (11) et une seconde couche conductrice (12) d'avoir un premier indice de réfraction, dans lequel le composant d'affichage (25) a un premier angle de vue lorsque la couche à indice de réfraction variable (13) a le premier indice de réfraction,
dans laquelle la couche à indice de réfraction variable (13) comprend : au moins une structure de transmission optique (14) entre la première couche conductrice (11) et la seconde couche conductrice (12), dans laquelle la structure de transmission optique (14) comprend un noyau (15) et une gaine (16) fixée à une surface extérieure du noyau (15), et le noyau (15) a un indice de réfraction supérieur à un indice de réfraction de la gaine (16) ; **caractérisé par le fait que** l'indice de réfraction du noyau (15) varie en réponse à la variation de la tension appliquée entre la première couche conductrice (11) et la seconde couche conductrice (12), de telle sorte que l'indice de réfraction augmente avec l'augmentation de la tension appliquée.

4. La méthode selon la revendication 3, comprenant en outre :
si le mode d'affichage à activer est un deuxième mode d'affichage, appliquer une deuxième tension entre la première couche conductrice (11) et la deuxième couche conductrice (12) dans le composant d'affichage (25), pour permettre à la couche à indice de réfraction variable (13) entre la première couche conductrice (11) et la deuxième couche conductrice (12) d'avoir un deuxième indice de réfraction, le composant d'affichage (25) ayant un deuxième angle de vue avec la couche à indice de réfraction variable (13) ayant le deuxième indice de réfraction.

5. La méthode selon la revendication 3 ou 4, dans laquelle le terminal est en outre équipé d'un transformateur, et la méthode comprend en outre :
contrôler une tension de sortie du transformateur (17) en fonction du mode d'affichage à activer, la tension de sortie du transformateur (17) étant appliquée entre la première couche conductrice (11) et la seconde couche conductrice (12).

6. La méthode selon la revendication 5, dans laquelle la commande de la tension de sortie du transformateur en fonction du mode d'affichage à activer comprend :
contrôler, en fonction du mode d'affichage à activer, un sous-ensemble de bobines secondaires du transformateur à coupler avec la bobine primaire, en ajustant l'état de commutation d'un commutateur,
dans lequel chaque sous-ensemble de bobines secondaires, lorsqu'il est couplé à la bobine primaire, provoque une tension respective appliquée entre la première couche conductrice (11) et la seconde couche conductrice (12) par le transformateur (17).
